# EUROPEAN PATENT APPLICATION

(11) **EP 4 738 993 A2**
(43) Date of publication of application: **06.05.2026**
(21) Application number: 26151831.0
(22) Date of filing: 28.02.2023
(51) Int. Cl.: H05B 6/12

(54) **OBJECT DETECTION TECHNIQUES IN A MULTI-FUNCTION HOB**

(30) Priority: 01.03.2022 IN 202211011064
(62) Divisional of application: 23714000.9
(71) Applicant: Dolby Intellectual Property Licensing, LLC, Niskayuna, NY 12309 (US)
(72) Inventor: GANESH, Jayanti, K 560 066 Bengaluru (IN); KANAKASABAI, Viswanathan, K 560 066 Bengaluru (IN); TATIKONDA, Subbarao, K 560 066 Bengaluru (IN); NARAYANA BHAT, Suma Memana, K 560 066 Bengaluru (IN)
(74) Representative: AWA Sweden AB

(57) **Abstract**

This disclosure provides systems, methods and apparatuses for object detection techniques in an apparatus of a multi-function hob. In an induction heating mode, the apparatus may support induction heating of an induction heating device (such as a cooking vessel or utensil). In a wireless power transfer (WPT) mode, the apparatus may support wireless power transfer to a power receiver. The apparatus may be capable of performing different object detection techniques to detect an induction heating device, a wireless power receiver (PRx), or a foreign object (FO). In accordance with this disclosure, a controller may control timing of each instance of the different object detection techniques such that the object detection techniques are used at different times. In some implementations, the object detection techniques are coordinated to improve accuracy of detecting an FO, a PRx, or an induction heating device.

## Description

### TECHNICAL FIELD

This disclosure relates generally to a multi-function hob having an apparatus that supports an induction heating mode and a wireless power transfer mode. More specifically, this application relates to coordinating object detection techniques associated with the various modes supported by the apparatus.

### DESCRIPTION OF RELATED TECHNOLOGY

Induction cooking appliances (such as kitchen hobs) have been developed to enable induction heating of cooking vessels or utensils. For example, a hob may include several "burner" locations at which a user may place a cooking vessel or utensil to be heated using induction heating. In a conventional hob, an electric or gas heat source is used to heat a cooking vessel in contact with the heat source. In contrast, in an induction cooking appliance, an electromagnetic field may be generated by one or more coils (sometimes referred to as induction coils) to heat a cooking vessel. During induction heating, the electromagnetic field induces a current in a metal surface of the cooking vessel or utensil. The induced current in the surface of the cooking vessel or utensil then induces even other currents (sometimes referred to as eddy currents) within the cooking vessel thereby providing heat throughout the cooking vessel.

Meanwhile, in a separate technical field, technology has been developed to enable wireless power transfer from a Power Transmitter (sometimes also referred to as a "wireless power transmission apparatus") to a Power Receiver (sometimes also referred to as a "wireless power reception apparatus"). A Power Receiver may be included in various types of devices, such as mobile devices, small electronic devices, computers, tablets, gadgets, appliances (such as cordless blenders, kettles, or mixers), and some types of larger electronic devices, among other examples. Wireless power transfer may be referred to as a contactless power transmission or a non-contact power transmission. The wireless power may be transferred using inductive coupling or resonant coupling between the Power Transmitter and the Power Receiver. For example, the Power Transmitter may include one or more coils that produces an electromagnetic field. The electromagnetic field may induce an electromotive force in a secondary coil of the Power Receiver when the secondary coil is placed in proximity to the primary coil. In this configuration, the electromagnetic field may wirelessly transfer power to the secondary coil.

Because induction heating and wireless power transfer have some common elements and applications within a kitchen, there is a desire to provide a multi-function hob that supports both an induction heating mode and a wireless power transfer mode. However, there is a risk of damage or ineffectiveness if a multi-function hob uses the wrong mode for a Power Receiver or a cooking vessel. Furthermore, when a foreign metal object (such as a key, a coin, a metallic can, or aluminum foil, among other examples) is in proximity of the electromagnetic field, the foreign metal object may be undesirably heated up due to eddy currents.

### SUMMARY

The systems, methods, and apparatuses of this disclosure each have several innovative aspects, no single one of which is solely responsible for the desirable attributes disclosed herein.

One innovative aspect of the subject matter described in this disclosure can be implemented as apparatus. For example, may be a Power Transmitter (PTx) associated with a first location of a multi-function hob. The apparatus may include one or more coils capable of generating a magnetic field for induction heating or wireless power transfer in accordance with an induction heating mode or a wireless power transfer mode, respectively. The apparatus may include one or more object detection units configured to implement a plurality of object detection techniques that includes at least an induction heating device detection technique, a wireless power receiver (PRx) detection technique, and a foreign object (FO) detection technique. The apparatus may include a controller configured to cause the one or more object detection units to perform instances of the plurality of object detection techniques such that each instance is performed at a different time from other instances. The controller may be further configured to control the one or more coils to generate the magnetic field for the induction heating mode or the wireless power transfer mode based, at least in part, on results of the plurality of object detection techniques.

Another innovative aspect of the subject matter described in this disclosure can be implemented as method. The method may include implementing, by one or more detection units, a plurality of object detection techniques that includes at least an induction heating device detection technique, a wireless power receiver (PRx) detection technique, and a foreign object (FO) detection technique. The method may include causing the one or more detection units to perform instances of the plurality of object detection techniques such that each instance is performed at a different time from other instances. The method may include controlling one or more coils of an apparatus to generate a magnetic field for induction heating or wireless power transfer in accordance with an induction heating mode or a wireless power transfer mode, respectively, based, at least in part, on results of the plurality of object detection techniques.

### BRIEF DESCRIPTION OF THE DRAWINGS

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.
**Figure 1** shows an example multi-function hob and example objects.
**Figure 2** shows a cross-section view of an example Power Transmitter (PTx) that may be used in a first location of a multi-function hob.
**Figure 3** shows a block diagram of an example PTx for use in a multi-function hob.
**Figure 4** shows example object detection techniques.
**Figure 5** shows example timing diagrams in which the timing of different object detection techniques is not coordinated by a controller.
**Figure 6** shows example timing diagrams in which the timing of different object detection techniques is coordinated by a controller.
**Figure 7** shows a conceptual diagram to illustrate how a result of one type of object detection technique may alter a behavior of other types of object detection techniques.
**Figure 8** shows a flowchart diagram of an example process that includes multiple types of object detection techniques.
**Figure 9** shows a flowchart diagram of an example process associated with a PTx in a multi-function hob in accordance with some implementations.
**Figure 10** shows a block diagram of an example apparatus for use in a multi-function hob.

Like reference numbers and designations in the various drawings indicate like elements.

### DETAILED DESCRIPTION

This disclosure provides systems, methods and apparatuses for object detection techniques associated with an apparatus of a multi-function hob. In an induction heating mode, the apparatus may support induction heating of an induction heating device (such as a cooking vessel or utensil). In a wireless power transfer (WPT) mode, the apparatus may support wireless power transfer to a wireless Power Receiver (PRx). For brevity, this disclosure may refer to the apparatus as a Power Transmitter (PTx) because it supports the wireless power transfer mode. It should be understood that the disclosed PTx may differ from a traditional PTx in that it is configured to also support the induction heating mode when an appropriate induction heating device is positioned in proximity to one or more coils of the PTx.

Because the PTx of this disclosure supports both induction heating and wireless power transfer, it is desirable to detect objects of different types that may be positioned in proximity to the one or more coils of the PTx. Examples of a first type of object may include as pots, pans, woks, or any cooking vessel or utensil for which an induction heating mode is appropriate. These may be referred to as an induction heating device. Examples of a second type of object may include mobile devices, small electronic devices, computers, tablets, gadgets, appliances (such as cordless blenders, kettles, or mixers), or any type of device that includes a PRx for which a wireless power transfer mode is appropriate. Another type of object that may be inadvertently located in an operative environment of a PTx may be referred to as a foreign object. Non-limiting examples of foreign objects may include a ferrous object, a metallic can, a coin, a metal spoon, a key, aluminum foil, or other electrically conductive or ferrous objects that is not an induction heating device or a PRx. When a foreign object (FO) is in proximity of a magnetic field of the PRx, the foreign object may interact with the magnetic field and become undesirably heated up. Thus, it is desirable to detect which type of object (an induction heating device, a PRx, or an FO) is present in an operative environment of a PTx.

In accordance with aspects of this disclosure, a PTx may be capable of performing different object detection techniques to detect an induction heating device, a PRx, or an FO. The different object detection techniques may include at least an induction heating device detection technique, a PRx detection technique, and an FO detection technique. Each of the different object detection techniques may include a routine or process by which a different type of object can be detected. It has been discovered that some types of object detection techniques may negatively impact or impair the results of another type of object detection techniques when they are performed at the same time. For example, if the timing of different object detection techniques is not coordinated properly, there is a chance of false detection which can affect the functionality of a multi-function hob. Furthermore, the results of one type of object detection technique may alter or negate a need to perform another type of object detection technique.

Aspects of this disclosure are directed to timing and conditions associated with different types of object detection techniques. For example, a controller may control timing of each instance of the different object detection techniques such that the object detection techniques are used at different times. In some implementations, the object detection techniques are coordinated to improve accuracy of detecting an induction heating device, a PRx, or an FO. When an induction heating device, a PRx, or an FO is detected by one of the object detection techniques, the controller may adjust which types of object detection techniques are subsequently used. Furthermore, the controller may operate one or more coils of the PTx in accordance with an induction heating mode, wireless power transfer mode, or neither based on whether an induction heating device, a PRx, or an FO, respectively, have been detected.

Particular implementations of the subject matter described in this disclosure can be implemented to realize one or more of the following potential advantages. A multi-function hob may safely provide both induction heating and wireless power transfer at appropriate times based on the type of object present in an operative environment of a PTx. Aspects of this disclosure may enable faster and more accurate detection of various types of objects compared to traditional systems in which different types of object detection techniques are not coordinated. The use of different object detection techniques may prevent damage or dangerous conditions that may otherwise occur as a result of using an induction heating mode with a PRx or a foreign object.

The following description is directed to certain implementations for the purposes of describing innovative aspects of this disclosure. However, a person having ordinary skill in the art will readily recognize that the teachings herein can be applied in a multitude of different ways. The described implementations can be implemented in any means, apparatus, system, or method associated with a multi-function hob or any appliance that can support both induction heating and wireless power transfer.

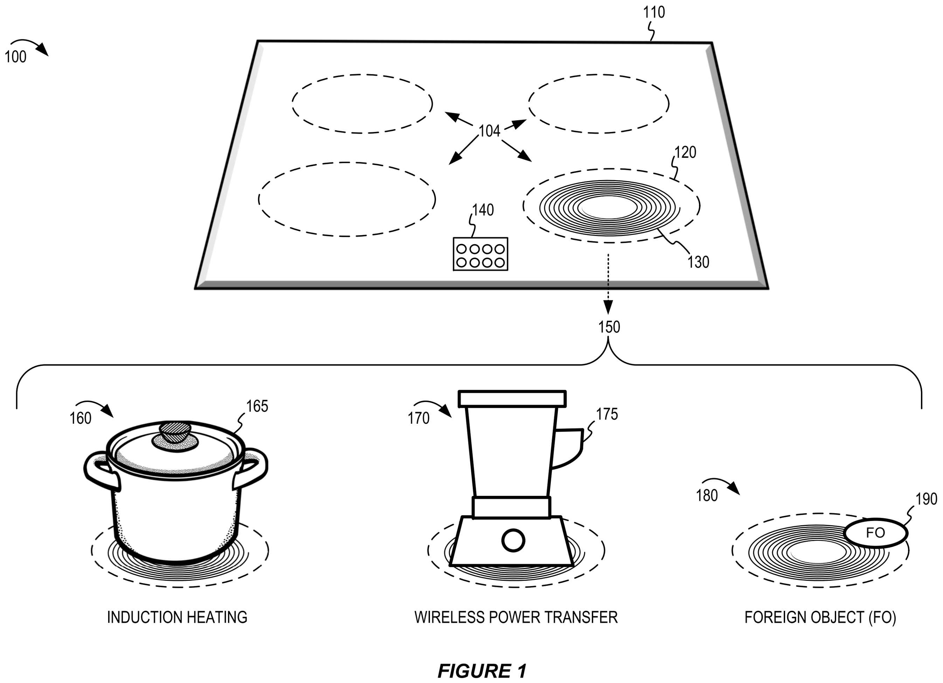

**Figure 1** is a conceptual diagram 100 showing an example multi-function hob 110 and example objects. The multi-function hob 110 may include several locations 104 for placement of objects. At least one of the locations 104 may include a PTx 120 that supports induction heating or wireless power transfer to an object when an appropriate object is placed at a location associated with the PTx 120. Figure 1 depicts a PTx 120 at one of the locations 104. It should be understood that the multi-function hob 110 may include a PTx at more than one (or even all) of the locations 104. In such scenarios, each of the locations 104 that includes a PTx may operate in accordance with implementations described herein with reference to PTx 120. The multi-function hob 110 may include a first user interface 140 with inputs (such as knobs, buttons, or touchscreen sensors) to receive user input or to present indications to a user of the multi-function hob 110. In some implementations, the multi-function hob 110 may be referred to as a hob, a cooktop, a stove, or other term to refer to a kitchen appliance. Furthermore, while the examples described in this disclosure refer to a multi-function hob, aspects of this disclosure may be used with other types of appliances that support both induction heating and wireless power transfer. In some implementation, a multi-function hob may be portable in nature and may include a single PTx. For example, a portable multi-function hob may include a battery or be capable of an external power source to power the PTx. In some implementations, the portable multi-function hob (with one or more PTxs) may be suitable for camping.

The PTx 120 may include one or more primary coils. For brevity, this disclosure refers to the one or more primary coils as a primary coil 130 - however, it should be understood that some implementations of a PTx 120 may include more than one primary coil 130. The primary coil 130 is configured to generate a magnetic field for transmitting wireless energy to an object in the magnetic field of the primary coil 130. In some implementations, the primary coil 130 may be a wire coil coupled to a driver that applies power to the primary coil 130 during either an induction heating operation or a wireless power transfer operation.

A multi-function hob 110 may provide at least one PTx 120 that can support either induction heating or wireless power transfer depending on which type of object is in proximity to the primary coil 130. The primary coil 130 may be referred to as an induction coil - particularly when the PTx 120 is used in an induction heating mode. Additionally, or alternatively, the primary coil 130 may be referred to as a power transfer coil - particularly when the PTx 120 is used in a wireless power transfer mode. For brevity, this disclosure may refer use the terms "apparatus" and "PTx" interchangeably to collectively refer to an apparatus that supports both an induction heating mode and a wireless power transfer mode

Figure 1 also illustrates examples 150 of various types of objects that may be placed in the magnetic field of the primary coil 130. In a first example 160, the object may be an induction heating device 165. In a second example 170, the object may be a wireless Power Receiver (PRx) 175. In a third example 180, the object may be a foreign object 190.

Referring to the first example 160, an induction heating device 165 may be a cooking vessel, a utensil, or any other device which is intended to be heated using induction heating. During induction heating, the primary coil 130 may generate a magnetic field to transmit energy that causes eddy currents to be conducted in a ferrous or semi-ferrous surface of the induction heating device 165. The eddy currents conducted in the ferrous or semi-ferrous components of the induction heating device 165 cause the induction heating device 165 to become heated, thereby heating food or other materials placed in the induction heating device 165.

Referring to the second example 170, a device may include a PRx 175 having one or more receiving coils (sometimes referred to as a secondary coil). The PRx 175 also may have a rectifier to harvest power from the magnetic field and use the power to operate various other components of the device in which the PRx 175 is located. A PRx 175 and PTx 120 may operate in accordance with a technical standard specification that defines a communication protocol to control an amount of power transferred by the magnetic field.

It should be apparent that induction heating is not the same as wireless power transfer. An aim of induction heating is to transfer energy that creates eddy currents in the induction heating device 165, while such eddy currents are undesirable in a PRx 175. An aim of wireless power transfer is to transfer energy that creates electromagnetic potential in a secondary coil that can be harvested for powering components of the device which contains the PRx 175..

Referring to the third example 180, a foreign object 190 (sometimes referred to as a foreign metal object) may be in the operative environment of the primary coil 130. An FO 190 may be any object that is electrically conductive or have magnetic permeability and that is not intended as an induction heating device 165 or a PRx 175. When an FO 190 is in the operative environment of the primary coil 130 and the primary coil 130 is generating a magnetic field, the FO 190 may be undesirably heated. There exists a potential of fire, damage to the PTx 120, or harm to a user if the FO 190 is heated by either induction heating or wireless power transfer. Therefore, when an FO 190 is detected, the PTx 120 may discontinue generating the primary magnetic field or otherwise prevent the PTx 120 from transferring sufficient amounts of energy in the FO 190 to cause the FO 190 to heat beyond a safe level.

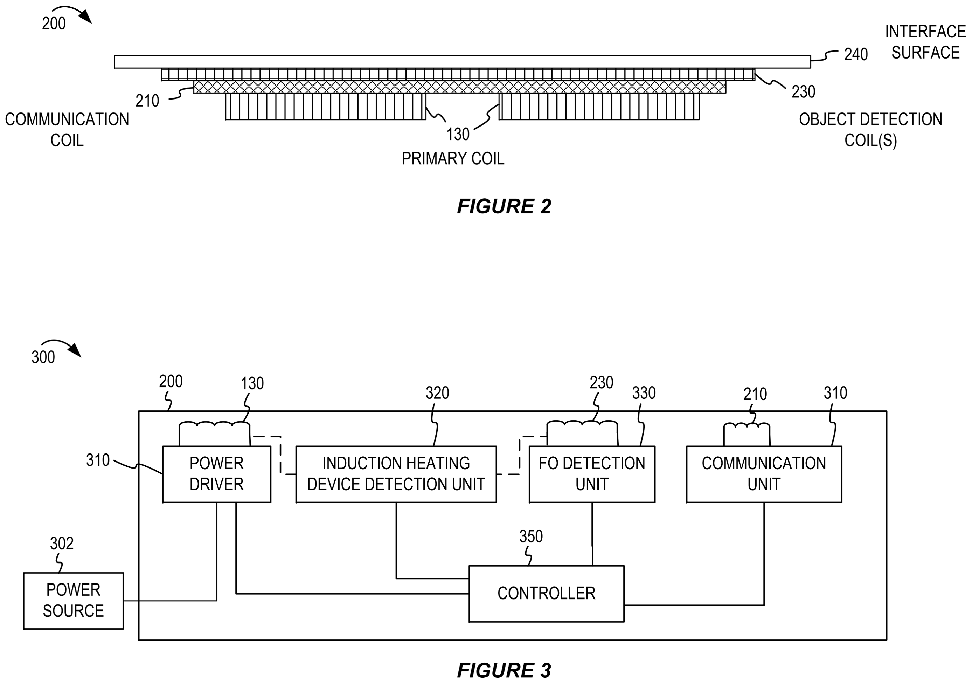

**Figure 2** shows a cross-section view of an example PTx 200 that may be used in a first location of a multi-function hob. The PTx 200 may be an example of the PTx 120 described with reference to Figure 1. The PTx 200 may include a primary coil 130 capable of generating a magnetic field for induction heating or wireless power transfer as described with reference to Figure 1. As shown in Figure 2, the PTx 200 may include one or more communication coils (shown as communication coil 210) capable of communicating with a PRx (not shown). For example, the communication coil 210 may be an antenna or coil for use in short-range radio frequency communication (such as Near Field Communication, NFC). As described herein, the communication coil 120 may be used in a communication protocol between the PRx and the PTx 200 to control a wireless power transfer mode of the PTx 200.

In some implementations, the PTx 200 may include a detection apparatus (not shown, sometimes also referred to as an object detection mat). In some implementations, the detection apparatus may be integrated or coupled with the PTx 200 or may be positioned in an interface space between the PTx 200 and potential objects that could be placed on or near the PTx 200. The detection apparatus may include one or more detection coils 230. For example, the detection apparatus may include different pairs of detection coils 230 that can be used to measure changes in a magnetic field in association with an object detection technique. Different amounts of changes in the magnetic field may be sensed by the detection coils and used to detect the presence of a foreign object..

In some implementations, the PTx 200 may include or be associated with an interface surface 240. The interface surface 240 may demark a space between the PTx 200 and an object (not shown) placed in the operative environment of a magnetic field produced by the PTx 200. For example, the interface surface 240 may include a surface of the PTx 200 on which a PRx or induction heating device may be placed. During induction heating or wireless power transfer, the primary coil 130 may induce a magnetic field through the interface surface and into an operative environment in which the induction heating device or PRx is placed. Thus, the "operative environment" is defined by the magnetic field in the PTx 200. In some implementations, the interface surface 240 may be a glass or non-ferrous material. In some implementations the interface surface 240 may be a component of a multi-function hob that includes more than one PTx such that each PTx is associated with a different location of the interface surface 240.

**Figure 3** shows a block diagram 300 of an example PTx 200 for use in a multi-function hob. The PTx 200 may include the primary coil 130, the object detection coils 230, and the communication coil 210 as described with reference to Figure 2. The PTx 200 also may include a power drive 310 configured to provide power to the primary coil 130 causing the primary coil 130 to produce the magnetic field for induction heating or wireless power transfer. For example, the power driver 310 may include one or more switches, drivers, series capacitors, rectifiers or other components. The PTx 200 also may include a controller 350 that controls the components of the power driver 310. For example, the controller 350 may determine an operating point (such as frequency, voltage, current, or any combination thereof) for the induction heating mode or the wireless power transfer mode. The controller 350 may control the power driver 310 according to the operating point. In some implementations, the controller 350 may be implemented as a microcontroller, dedicated processor, integrated circuit, application specific integrated circuit (ASIC) or any other suitable electronic device. In some implementations, the controller 350 may be dedicated to a particular PTx (such as PTx 200 in Figure 3). Alternatively, or additionally, the controller 350 may be used to separately control operations of more than one PTx - such as a processor of a multi-function hob that has more than one PTx. The processor of the multi-function hob may implement the functionality of a separate controller for each PTx of the multi-function hob.

A power source 302 may provide power to the power driver 310. For example, the power source 302 may convert alternating current (AC) power to direct current (DC) power. In some implementations, the power source 302 may include a converter that receives an AC power from an external power supply (such as a supply mains) and converts the AC power to a DC power used by the power drive 310. In some implementations, a multi-function hob may include a power source 302 that provides DC power to more than one PTx. Furthermore, the power source 302 may provide operating power to one or more controllers (such as controller 350).

The PTx 200 may include a communication unit 310 coupled to the communication coil 210. The communication unit 310 may be configured to send or receive communications via the communication coil 210. For example, the communication unit 310 may include modulators or demodulators that convert information to modulated signals conveyed by a communication signal sent or received by the communication coil 210. The communication coil 210 may include an antenna (such as a loop antenna) or other component to send or receive wireless communication signals. In some implementations, the communication unit 310 may support short range radio frequency communication (such as Bluetooth^{™}) or Near-Field Communication (NFC). NFC is a technology by which data transfer occurs on a carrier frequency of 13.56 MHz. The communication unit 310 also may support any suitable communication protocol. The communication unit 310 may be used for communication of information to or from the controller 350 and a PRx during a wireless power transfer mode. In some implementations, the communication unit also may provide control power for a PRx at startup or during operation. The controller 350 may control characteristics of wireless power that the PTx 200 provides to the PRx. For example, the controller 350 may receive the information during a hand shaking process with the PRx. The information may include information about the PRx (such as a power rating, load states, the manufacturer, the model, or parameters of the receiver when operating on a standard transmitter, among other examples). The controller 350 may use this information to determine at least one operating point (such as frequency, duty cycle, voltage, etc.) for wireless power it provides to the PRx during a wireless power transfer mode. Although not shown in Figure 3, it should be obvious that a PRx may include a corresponding communication unit (not shown) and communication coil (not shown) that enables communication between the PRx and the communication unit 310 of the PTx 200. When a PRx is placed on the interface surface of the PTx 200, a pinging of the communication unit 310 via the communication coil 210 may be responded by a reply communication from the PRx. The pinging and reply communication may form part of a handshaking process that includes two-way communication between the PTx 200 and the PRx. Based on the successful handshaking, the controller 350 may determine that a PRx is detected. Thus, the communication unit 310 and communication coil 210 may be used in a PRx detection technique to detect the presence of PRx. In some implementations, the communication unit 310 and the communication coil 210 may be collectively referred to as a PRx detection unit.

The PTx 200 also may include an induction heating device detection unit 320 and a foreign object (FO) detection unit 330. The FO detection unit 330 may be configured to detect a foreign object in the operative environment of the PTx 200 based on measurements of the object detection coils 230. In some implementations, the FO detection unit 330 may be integrated in the controller 350. For example, the FO detection unit 330 may be collocated or implemented as software within the controller 350. Alternatively, or additionally, the FO detection unit 330 may be implemented as a separate system of the PTx 200 or the multi-function hob. For example, the multi-function hob may include a foreign object detection mat (FOD mat) configured to detect a foreign object at any one of multiple PTx locations. In some implementations, the controller 350 may manage timing of when the FO detection unit 330 performs a foreign object detection assessment at a particular location associated with PTx 200. In some implementations, the foreign object detection technique is performed by the FO detection unit 330 using the object detection coils 230. This disclosure provides several example of how the FO detection unit 330 may detect foreign objects, including using active excitation or passive excitation of the object detection coils to measure differences among pairs of object detection coils.

The induction heating device detection unit 320 is illustrated in Figure 3 as a separate component. However, in some implementations, the induction heating device detection unit 320 may be collocated or integrated in the controller 350. Furthermore, in some implementations, the induction heating device detection unit 320 may use the primary coil 130 or the object detection coils 230 as part of an induction heating device detection technique. The induction heating device detection unit 320 may differ from the FO detection unit 330 based on criteria or conditions which cause the induction heating device detection unit 320 to determine that an induction heating device has been detected. Thus, the induction heating device detection unit 320 and the FO detection unit 330 may be associated with different object detection techniques that are specific to induction heating device detection or FO detection, respectively.

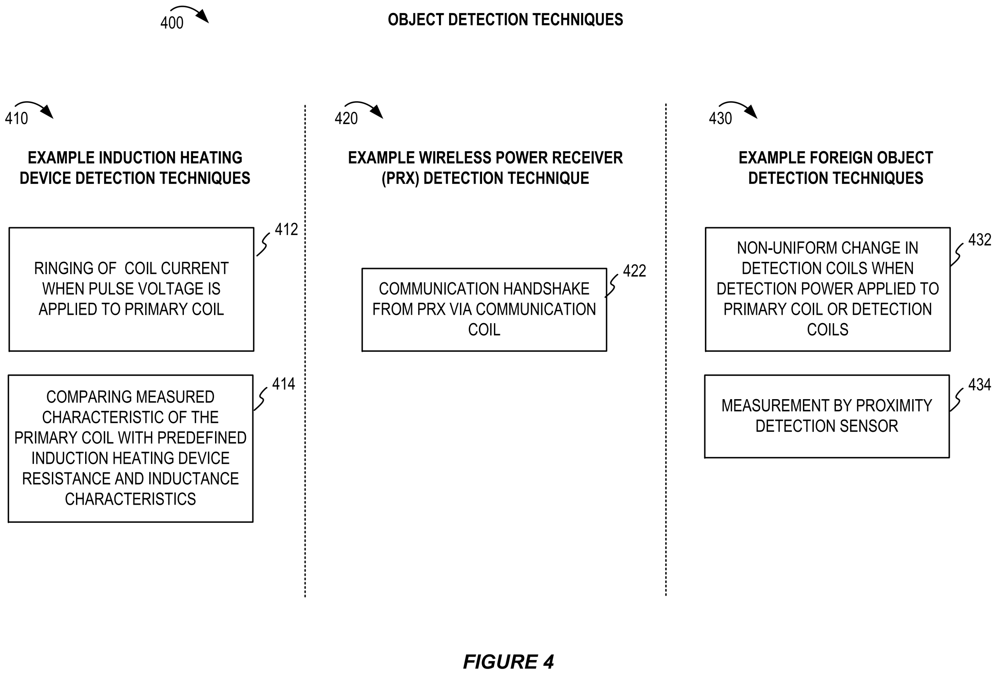

**Figure 4** shows example object detection techniques 400. The example object detection techniques 400 are described for pedagogical purposes and not intended as an exhaustive list of object detection techniques that could be used to detect an induction heating device, a PRx, or an FO. The example object detection techniques 400 include example induction heating device detection techniques 410, example PRx detection techniques 420, and example FO detection techniques 430.

The example induction heating device detection techniques 410 may include a first example 412 in which an induction heating device is detected based on the ringing of the coil current when a pulse voltage is applied to the primary coil 130. For example, the induction heating device detection technique may include an operation in which a detection power pulse (typically smaller than the power used for induction heating or wireless power transfer) is applied to the primary coil or the object detection coils. The presence of induction heating device will cause a current in the primary coil 130 to settle to zero value in a short time (such as less than a threshold time), whereas, the absence of the induction heating device will cause the current in the primary coil 130 to oscillate and settle to zero after a longer time (such as more than the threshold time). In short, this measurement of current and time is used to determine the presence of the induction heating device.

In a second example 414 of the example induction heating device detection techniques 410, the induction heating device detection unit may determine that a cooking vessel or utensil is detected by comparing a detection power characteristic of the primary coil with predefined signatures associated an induction heating device. For example, the predefined signature may include a resistance or inductance characteristic of the coil primary that will change as a result of a cooking vessel or utensil being placed in the operative environment. When the characteristic change is detected, the induction heating device detection unit may determine that an induction heating device has been detected.

There may be other example induction heating device detection techniques not shown in Figure 4. An induction heating device detection technique may be referred to as pan detection, pan sensing, or any other term which refers to detecting an induction heating device that is intended for use with induction heating.

The example PRx detection techniques 420 may include a communication handshake between the PTx and a PRx 422. For example, the communication handshake may include the PTx receiving a communication from a PRx that indicates the PRx implements a technical standard specification for wireless power transfer. Although a communication handshake 422 may be one PRx detection technique, there may be other PRx detection techniques which can be used to verify an object is a valid PRx intended for use with wireless power transfer.

The example FO detection techniques 430 may include a first example 432 in which a foreign object is detected based on a non-uniform change in object detection coils when a detection power is applied to a primary coil or the object detection coils. For example, the FO detection technique may include an operation in which a detection power (typically smaller than a power used for induction heating or wireless power transfer) is applied to either the primary coil or the object detection coils. An FO detection unit may measure detection values that represent differences among pairs of object detection coils. For example, each detection value may indicate a differential current, a differential voltage, a differential inductance, or a frequency response, among other example, for a pair of object detection coils when the detection power is applied to either the primary coil or the object detection coils. When the detection values of many pairs of detection coils indicate a non-uniform change resulting from the detection power, the FO detection unit may determine that a foreign object has been detected. In some implementations, the FO detection unit may compare each detection value to a detection threshold to determine whether a foreign object is near one of the detection coils in a coil pair. In some implementations, the FO detection unit may determine how many pairs of detection coils have a detection value that indicate the presence of a metal object. The metal object may be determined to be a foreign object when fewer coil pairs (such as less than a threshold quantity) have detection values that indicate the presence of the metal object. Conversely, the FO detection unit may determine that the metal object is an induction heating device or a PRx when more coil pairs (such as more than the threshold quantity) have detected the presence of the metal object.

In an implementation that uses active excitation, an FO detection unit may cause a driver (not shown) to excite a pair of detection coils using a high frequency (higher than a frequency typically used for the primary magnetic field, such as 200 kHz or higher, as an example). The coil pair may be coupled in a parallel circuit to a driver that concurrently excites the detection coils of the coil pair. When present, the metal object may cause a first detection coil to experience a different impedance or current flow compared to the second detection coil (where no metal object is present). By comparing the current drawn through the first detection coil and the second detection coil, the FO detection unit may determine that the metal object is present near the first detection coil or the second detection coil. The difference in current drawn by a coil pair may be referred to as a detection value.

In an implementation that uses passive excitation, the FO detection unit may observe voltages that are induced in detection coils based on the magnetic field produced by the primary coil. The detection coils in a coil pair may be connected in series and terminated by a known impedance. When the primary coil is excited by the PTx, the magnetic field produced by the primary coil may induce voltages in the detection coils of a coil pair. In the absence of a foreign object, the voltages in the detection coils may be uniform and effectively cancel out. Conversely, when a foreign object is present, the voltages in the detection coils are non-uniform and results in a differential voltage that can be measured.

Another example 343 of the example FO detection techniques 430 may use a measurement by a proximity detection sensor. A proximity detection sensor may detect proximity of a metal object in an operative environment of the PTx. As described herein, the metal object may be determined to be a foreign object if it does not match a characteristic associated with an induction heating device or a PRx.

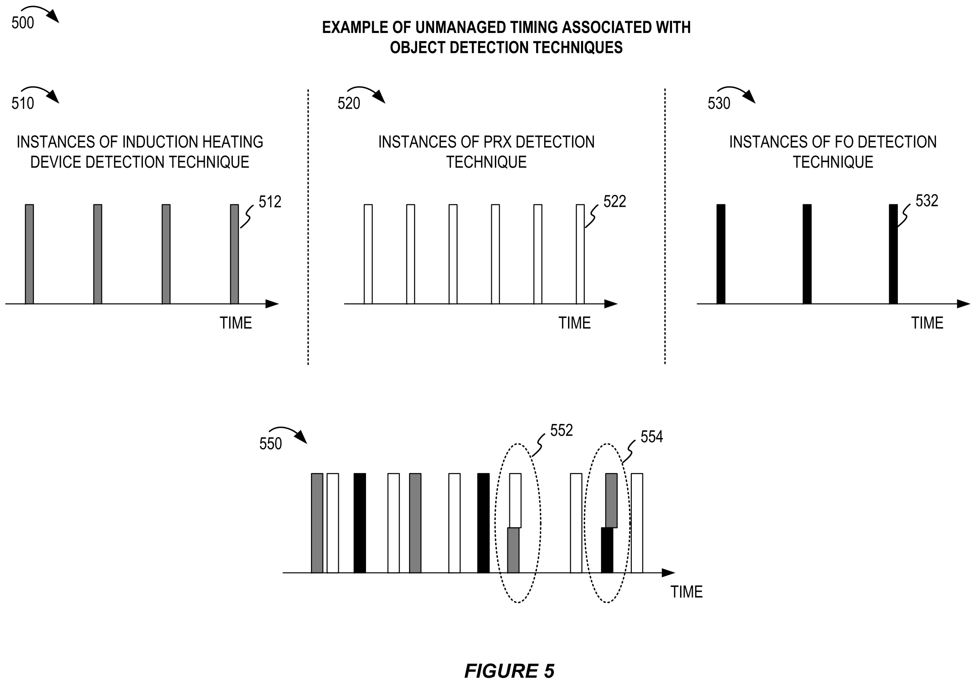

**Figure 5** shows example timing diagrams 500 in which the timing of different object detection techniques is not coordinated by a controller. For example, a first timing diagram 510 shows the timing for instances (such as instance 512) of an induction heating device detection technique. A second timing diagram 520 shows the timing for instances (such as instance 522) of a PRx detection technique. A third timing diagram 530 shows the timing for instances (such as instance 532) of an FO detection technique. Each of the timing diagrams 510, 520, and 530 illustrate a different periodicity (100s of milliseconds to few seconds) for the instances of their respective object detection technique. When considered independently, the various types of object detection techniques may be adequate for their respective intended purposes. However, heretofore, a PTx has not supported a combination of various object detection techniques. Absent the techniques of this disclosure, there exists a possibility that the periodicities of the respective object detection technique could cause overlapping time periods for more than one type of object detection technique.

A fourth timing diagram 550 illustrates an example when multiple types of object detection techniques are combined without controlling the timing of one object detection technique in relation to another. For example, in a conventional system that does not implement the techniques of this disclosure, there is a possibility of an instance of a PRx detection technique and an instance of an induction heating device detection technique occurring in an overlapping time during a first time period 552. As another example, there is a possibility of an instance of an FO detection technique and an instance of an induction heating device detection technique occurring in an overlapping time during a second time period 554.

Performing different object detection techniques at the same time may cause inaccurate or unexpected results for the object detection techniques. For example, the induction heating device detection technique may use a first detection power in a primary coil while the FO detection technique may use a second detection power in the object detection coils. The first detection power may create an inaccurate measurement of a detection value related to the second detection power, or vice versa. Furthermore, the induction heating device detection technique may prevent reception of a communication expected in a PRx detection technique. Thus, there exists a problem when different types of object detection techniques are performed concurrently.

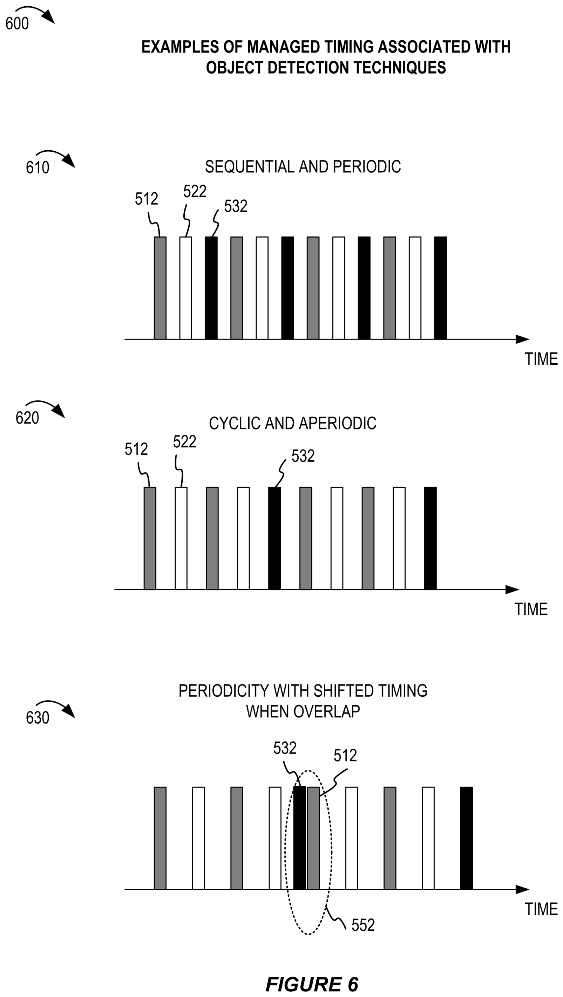

**Figure 6** shows example timing diagrams 600 in which the timing of different object detection techniques is coordinated by a controller. In a first example 610, a controller may cause one or more object detection units (such as an induction heating device detection unit, a PRx detection unit, and an FO detection unit) to perform their respective object detect techniques according to a sequential and periodic schedule. For example, an instance 512 of an induction heating device detection technique may be followed by an instance 522 of a PRx detection technique, which may be followed by an instance 532 of an FO detection technique. The order of the sequence may be different from that illustrated in Figure 6.

A second example 620 illustrated in Figure 6 shows timing for instances of a plurality of object detection techniques in which the object detection techniques form a cycle and aperiodic pattern. For example, the FO detection technique (such as instance 531) may occur aperiodically within a cycle of detection techniques that include more often instances of induction device detection techniques and PRx detection techniques.

In a third example 630 illustrated in Figure 6, the controller may attempt to maintain separate periodicities associated with the different object detection techniques. However, the controller may shift (forward or backward) the timing of an instance for an object detection technique when that instance would otherwise overlap another instance of another object detection technique. As shown in time period 552, an instance 532 of a FO detection technique may be shifted earlier than would otherwise occur such that the instance 532 of the FO detection technique occurs before an instance 512 of the induction heating device detection technique.

Although Figure 6 illustrates several examples of timing for different object detection techniques, there may be other examples in which a controller manages timing for the various types of object detection techniques. In some implementations, a regulation or policy may specify a maximum power threshold that limits a total amount of power that can be used by the PTx during a time period when in standby mode. For example, the maximum power threshold may be about 0.5 watts (such as 0.5 Watt Hours of energy over one hour of time). One or more of the plurality of object detection techniques may include temporarily energizing the primary coil or object detection with a detection power as part of a routine to measure a characteristic associated with the resulting magnetic field. In some implementations, a controller may actively manage the periodicity or timing of instances of the plurality of object detection techniques such that a sum of the amount of detection power for the plurality of object detection techniques over a time period is less than the maximum power threshold.

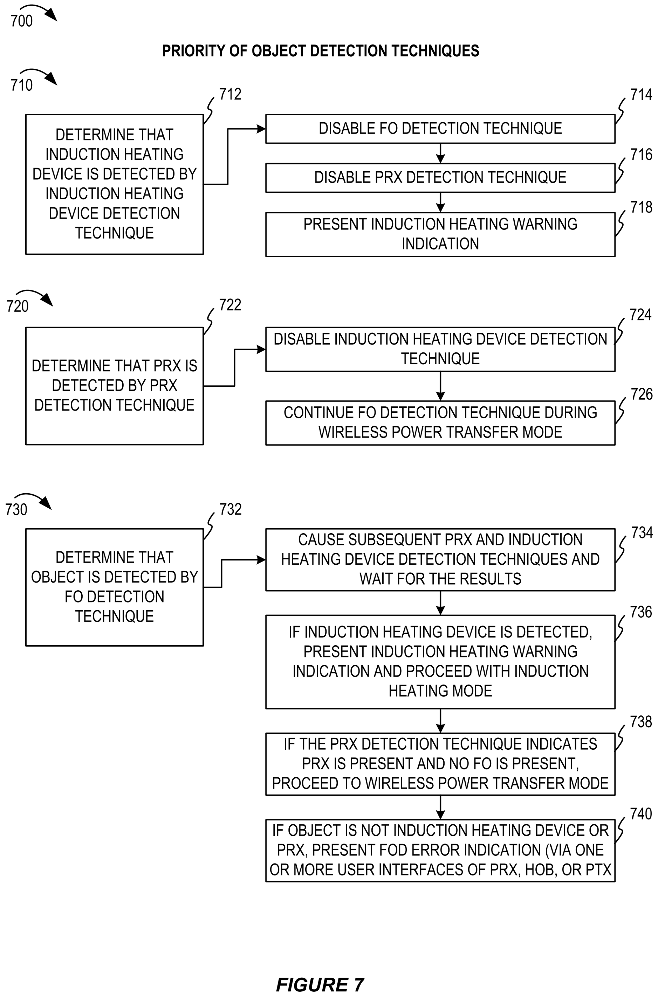

**Figure 7** shows a conceptual diagram 700 to illustrate how a result of one type of object detection technique may alter a behavior of other types of object detection techniques. Although, in some implementations, various types of object detection techniques may be performed in any order, the result of one object detection technique may cause the controller to alter the types of object detection techniques that are subsequently performed. Thus, subsequent object detection techniques may depend on which object detection technique is the first one to detect a corresponding type of object. In some implementations, the controller may be configured with priority settings that control which types of object detection techniques are used after a particular type of object is detected.

In a first example 710, at block 712 the controller may determine that an induction heating device has been detected as a result of an induction heating device detection technique. The controller may perform operations in response to determining that the induction heating device has been detected. Because the induction heating device will be used with an induction heating mode intended to heat ferrous and semi-ferrous materials in the induction heating device, it is expected that any object in the operative environment will be heated. Therefore, at block 714, the controller may disable further FO detection techniques. At block 716, the controller may disable further PRx detection techniques since they are not relevant to an induction heating mode of the PTx. At block 718, the controller may present an induction heating warning indication (for example a mode indicator, a "hot surface" warning indicator, or both) via a user interface of the multi-function hob or PTx while proceeding to transfer power to the induction heating device (not shown). The operations at blocks 714, 716, and 718 may remain in effect while the PTx is being operated in accordance with the induction heating mode.

In a second example 720, at block 722 the controller may determine that a PRx has been detected as a result of a PRx detection technique. The controller may perform operations in response to determining that the PRx has been detected. For example, at block 724, the controller may disable further induction heating detection techniques. This is because the PTx may be operated in accordance with a wireless power transfer mode. At block 726, the controller may continue performing further FO detection techniques periodically while the PTx is in the wireless power transfer mode. This is because an FO introduced to the operative environment could negatively impact the wireless power transfer or may become undesirably heated during wireless power transfer. The operations at blocks 724 and 726 may remain in effect while the PTx is being operated in accordance with the wireless power transfer mode.

In a third example 730, at block 732 the controller may determine that a metal object has been detected as a result of an FO detection technique. Initially, controller may assume that the metal object is a foreign object because it was first detected by the FO detection technique. However, there is a possibility that the metal object is an induction heating device or a PRx that has not yet been detected by the induction heating device detection technique or PRx detection technique, respectively. Therefore, the controller may cause at least one more instance of the induction heating device detection technique or the PRx detection technique before determining that the metal object is a foreign object. At block 734, the controller may cause the other detection techniques to be performed (such as immediately following a positive FO detection result) and may wait for the results of subsequent PRX and induction heating device detection techniques. At block 736, if the induction heating device detection technique determines that an induction heating device has been detected, the controller may present an induction heating warning (such as a hot surface indicator) and proceed to an induction heating mode. At block 738, the controller may determine whether the FO detection result was a false positive (error in detection) caused by placement of a PRx. For example, if the subsequent PRx detection technique determines that a PRx has been detected, the controller may proceed to wireless power transfer mode with PRx. The object detected by the FO detection technique may have been a PRx on the interface surface if the PRx was placed after the most recent PRx detection technique and before the FO detection technique that detected the object. However, if the neither the immediate subsequent induction heating device detection nor the immediate subsequent PRx detection were successful in detecting a valid induction heating device or PRx after the FO detection, at block 740 the controller may present a foreign object detected (FOD) error indication in one or more user interfaces (such as a user interface of the PTx, the multi-function hob, the PRx, or any combination thereof). Additionally, or alternatively, the FOD error indication also may be presented in the user interface associated with the PRx if the PRx is later detected before the FO detection is cleared. The operations at blocks 734, 736, 738, and 740 may remain in effect until the FO detection technique generates a result that no FO is detected. For example, a user may remove the FO so that the FO detection technique can verify there is no FO present in the operative environment of the PTx. Thereafter, the FOD error indication may be cleared. The controller may prevent the PTx from operating in both the induction heating mode and the wireless power transfer mode if the FO has been detected by the FO detection technique, until the FO is removed. It is noted that the controller may continue performing induction heating device detection techniques and PRx detection techniques to determine if an FO has been removed by the user or the FO detection has been manually overridden by user input. However, the FO detection result prevents power transfer to the PRx or induction heating device when an FO is present. Therefore, until the FO detection technique determines there is no FO, the controller may prevent the induction heating and wireless power transfer modes.

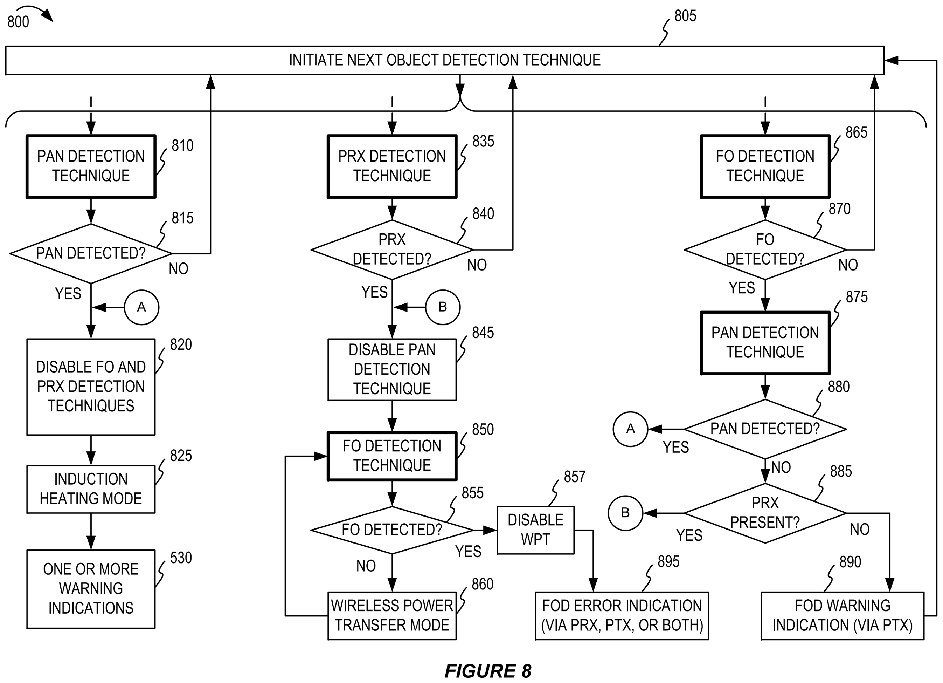

**Figure 8** shows a flowchart diagram of an example process 800 that includes multiple types of object detection techniques. The operations of the process 800 may be implemented by a controller of a PTx such in a multi-function hob. For example, the operations of process 800 may be implemented by a controller 350 described with reference to Figure 3. In some implementations, the controller may be included in, or part of, a processor of a multi-function hob.

At block 805, the controller may initiate an object detection technique. The object detection technique may be any one of a plurality of object detection techniques that include an induction heating device detection technique (referred to as a pan detection technique 810), a PRx detection technique 835, and an FO detection technique 865. Which object detection technique is initiated may depend on a schedule or timing management such as any of the examples described with reference to Figure 6.

When the controller initiates the pan detection technique in block 805, the process 800 may continue to block 810. At block 810, the controller may cause an induction heating device detection unit to perform the pan detection technique. At block 815, the controller may determine whether an induction heating device (referred to as a pan, for brevity) has been detected based on the pan detection technique. If a pan has not been detected, the process may return to block 805 where the controller may initiate a next object detection technique in accordance with a schedule, sequence, or periodicity.

At block 815, if a pan has been detected, the process continues to block 820. At block 820, the controller may disable the FO and PRx detection techniques such that subsequent instances of those object detection techniques are no longer performed until the pan is no longer detected. At block 825, the controller may operate the PTx in an induction heating mode. At block 530, the controller may cause a user interface of the PTx or multi-function hob to present one or more warning indications. For example, the warning indications may include a hot surface indicator.

Returning to block 805, when the controller initiates the PRx detection technique, the process 800 may continue to block 835. At block 835, the controller may cause a PRx detection unit to perform the PRx detection technique. At block 840, the controller may determine whether a PRx has been detected based on the PRx detection technique. If a PRx has not been detected, the process may return to block 805 where the controller may initiate a next object detection technique in accordance with a schedule, sequence, or periodicity.

At block 840, if a PRx has been detected, the process 800 may continue to block 845. At block 845, the controller may disable the pan detection technique such that subsequent instances of the pan detection technique are no longer performed until the PRx is no longer detected. However, before the controller moves to a wireless power transfer mode, the controller may verify that no FO is detected. Thus, at block 850, the controller may cause an FO detection unit to perform an FO detection technique. At block 855, if no FO is detected, the controller may operate the PTx in the wireless power transfer mode. While the PTx is in the wireless power transfer mode, the controller may periodically return to block 850 so that an FO detection technique is used to check for the presence of FO.

At block 855, if an FO is detected, the process may continue to block 857. At block 857, the controller may disable the wireless power transfer mode such that the primary coil no longer generates a magnetic field for wireless power transfer. The process may continue to block 895, where the controller causes one or more user interfaces (of the PTx, PRx, multi-function hob, or any combination thereof) to present an FOD error indication.

In some implementations, a controller may have a different behavior while the PTx is in a wireless power transfer mode. For example, if a FO has been detected and not cleared the controller may have set an FOD flag. If the FOD flag is set prior to detection of PRx in block 840, the controller may disable pan detection as in block 845 and WPT as in block 857 and indicate FO error in the user interfaces of PRx as in block 895. Additionally, or alternatively, in some implementations, the controller may avoid preforming the FO detection technique during wireless power transfer. For example, some controllers may avoid performing the features of blocks 850, 855, 857 and 895 when the PTX is in wireless power transferring mode in block 860.

Returning to block 805, when the controller initiates the FO detection technique, the process 800 may continue to block 865. At block 865, the controller may cause an FO detection unit to perform the FO detection technique. At block 870, the controller may determine whether an FO has been detected based on the FO detection technique. If an FO has not been detected, the process may return to block 805 where the controller may initiate a next object detection technique in accordance with a schedule, sequence, or periodicity.

At block 870, if an FO has been detected as a result of the FO detection technique, the process may continue to block 875. At this point, the controller may attempt to verify whether the FO is indeed a foreign object or whether the FO detection technique has actually detected an induction heating device. At block 875, the controller may initiate a pan detection technique. At block 880, if the pan detection technique indicates a pan is detected, the process may continue to block 820 so that the controller can operate the PTx in the induction heating mode. At block 880, if the pan detection technique does not indicate a pan is detected, then the controller proceeds to block 885 (as indicated by reference "A"). At block 885, the controller may determine whether a PRx is present (such as by performing an immediate subsequent PRx detection technique). If a PRx is present, the process may continue to block 845 (as indicated by reference "B"). If a PRx is not present, the process may continue to block 890. At block 890, the controller may cause a user interface of the PTx or multi-function hob to present an FOD warning indication. Because the PTx is not currently in the induction heating mode or wireless power transfer mode, the controller may continue to attempt further object detection techniques.

In some implementations, the controller may set an FOD flag (such as a value in memory associated with the controller) to maintain a result of the FO detection technique. For example, at block 885 if an FO is detected as a result of any FO detection technique, the controller may set the FOD flag and prevent the PTx from operating in the induction heating mode or the wireless power transfer mode until the FOD flag is cleared. Similarly, at block 885 if no FO is detected as a result of any FO detection technique, the controller may clear the FOD flag.

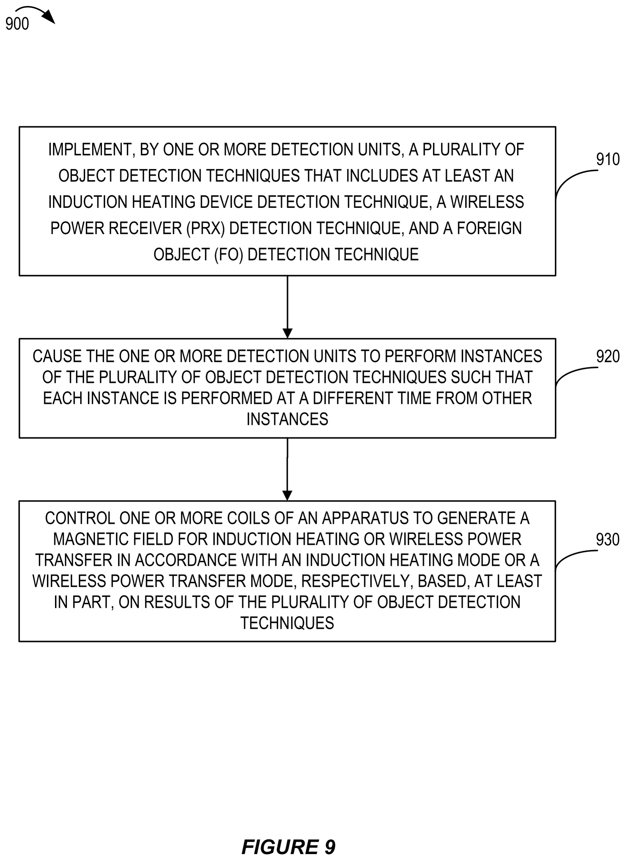

**Figure 9** shows a flowchart diagram of an example process 900 associated with a PTx in a multi-function hob in accordance with some implementations. The operations of the process 900 may be implemented by a controller of a PTx such in a multi-function hob. For example, the operations of process 900 may be implemented by a controller 350 described with reference to Figure 3. In some implementations, the controller may be included in, or part of, a processor of a multi-function hob.

At block 910, the controller may implement, by one or more detection units, a plurality of object detection techniques that includes at least an induction heating device detection technique, a PRx detection technique, and an FO detection technique.

At block 920, the controller may cause the one or more detection units to perform instances of the plurality of object detection techniques such that each instance is performed at a different time from other instances.

At block 930, the controller may control one or more coils of an apparatus to generate a magnetic field for induction heating or wireless power transfer in accordance with an induction heating mode or a wireless power transfer mode, respectively, based, at least in part, on results of the plurality of object detection techniques.

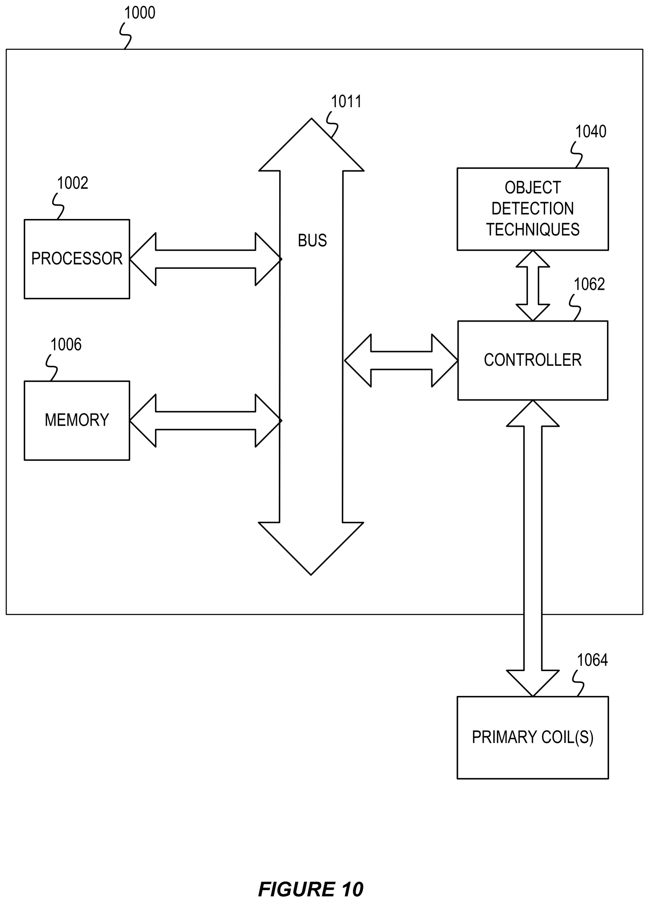

**Figure 10** shows a block diagram of an example apparatus 1000 for use in a multi-function hob. In some implementations, the apparatus 1000 may be part of a PTx, such as any of the wireless power transmitters described herein. In some implementations, the apparatus 1000 may be implemented as part of a multi-function hob that includes one or more PTx capable of operating in an induction heating mode and a wireless power transfer mode. The apparatus 1000 can include a processor 1002 (possibly including multiple processors, multiple cores, multiple nodes, or implementing multi-threading, etc.). The apparatus 1000 also can include a memory 1006. The memory 1006 may be system memory or any one or more of the possible realizations of computer-readable media described herein. The apparatus 1000 also can include a bus 1011 (such as PCI, ISA, PCI-Express, HyperTransport^{®}, InfiniBand^{®}, NuBus^{®}, AHB, AXI, etc.).

The apparatus 1000 may include one or more controllers (such as controller 1062) configured to manage timing of one or more object detection techniques 1040. The object detection techniques 1040 may be performed by corresponding ones of object detection units (not shown). In some implementations, the controller 1062 can be distributed within the processor 1002, the memory 1006, and the bus 1011. The controller 1062 may perform some or all of the operations described herein.

The memory 1006 can include computer instructions executable by the processor 1002 to implement the functionality of the implementations described with reference to Figures 1-9. Any one of these functionalities may be partially (or entirely) implemented in hardware or on the processor 1002. For example, the functionality may be implemented with an application specific integrated circuit, in logic implemented in the processor 1002, in a coprocessor on a peripheral device or card, etc. Further, realizations may include fewer or additional components not illustrated in Figure 10. The processor 1002, the memory 1006, and the controller 1062 may be coupled to the bus 1011. Although illustrated as being coupled to the bus 1011, the memory 1006 may be coupled to the processor 1002.

The figures, operations, and components described herein are examples meant to aid in understanding example implementations and should not be used to limit the potential implementations or limit the scope of the claims. Some implementations may perform additional operations, fewer operations, operations in parallel or in a different order, and some operations differently.

The foregoing disclosure provides illustration and description but is not intended to be exhaustive or to limit the aspects to the precise form disclosed. Modifications and variations may be made in light of the above disclosure or may be acquired from practice of the aspects. While the aspects of the disclosure have been described in terms of various examples, any combination of aspects from any of the examples is also within the scope of the disclosure. The examples in this disclosure are provided for pedagogical purposes. Alternatively, or in addition to the other examples described herein, examples include any combination of the following implementation options (enumerated as clauses for clarity).

### CLAUSES

Clause 1. An apparatus, including: one or more coils capable of generating a magnetic field for induction heating or wireless power transfer in accordance with an induction heating mode or a wireless power transfer mode, respectively; one or more object detection units configured to implement a plurality of object detection techniques that includes at least an induction heating device detection technique, a wireless power receiver (PRx) detection technique, and a foreign object (FO) detection technique; and a controller configured to: cause the one or more object detection units to perform instances of the plurality of object detection techniques such that each instance is performed at a different time from other instances, and control the one or more coils to generate the magnetic field for the induction heating mode or the wireless power transfer mode based, at least in part, on results of the plurality of object detection techniques.

Clause 2. The apparatus of clause 1, where the one or more object detection units include: an induction heating device detection unit configured to implement the induction heating device detection technique to detect a cooking vessel or utensil associated with the induction heating mode; a communication unit configured to implement the PRx detection technique to detect a PRx associated with the wireless power transfer mode; and an FO detection unit configured to implement the FO detection technique to detect a foreign object.

Clause 3. The apparatus of any one of clauses 1-2, where the controller is configured to manage timing for the instances of the plurality of object detection techniques such that the instances occur sequentially in a periodic cycle.

Clause 4. The apparatus of any one of clauses 1-2, where the controller is configured to manage timing for the instances of the plurality of object detection techniques such that the instances of the induction heating device detection technique, the PRx detection technique, and the FO detection technique occur aperiodically during a time period.

Clause 5. The apparatus of any one of clauses 1-4, where the controller is configured to: cause instances of the induction heating device detection technique to occur according to a first periodic schedule, cause instances of the PRx detection technique to occur according to a second periodic schedule, and cause instances of the FO detection technique to occur according to a third periodic schedule.

Clause 6. The apparatus of clause 5, where the controller is further configured to: shift a timing for an instance of any of the induction heating device detection technique, the PRx detection technique, or the FO detection technique when the timing of the instance overlaps any other one of the induction heating device detection technique, the PRx detection technique, or the FO detection technique.

Clause 7. The apparatus of any one of clauses 1-6, where the controller is further configured to: determine whether a cooking vessel or utensil is detected by any instance of the induction heating device detection technique; and while the cooking vessel or utensil is detected: disable the wireless power transfer mode, and discontinue causing instances of the PRx detection technique and the FO detection technique.

Clause 8. The apparatus of clause 7, where the controller is further configured to: cause the one or more coils to operate in accordance with the induction heating mode; and present an induction heating warning indication via a user interface of the apparatus to indicate that the one or more coils are operating in the induction heating mode.

Clause 9. The apparatus of clause 8, where the appliance is associated with a pan location of a hob, and where the induction heating warning indication includes a hot surface warning associated with the pan location.

Clause 10. The apparatus of any one of clauses 1-9, where the controller is further configured to: determine whether a PRx is detected by any instance of the PRx detection technique; and while the PRx is detected: disable the induction heating mode, discontinue causing instances of the induction heating device detection technique, and cause the one or more coils to operate in accordance with the wireless power transfer mode.

Clause 11. The apparatus of any one of clauses 1-9, where the controller is further configured to: determine whether an object is detected by a first instance of the FO detection technique; and cause an instance of the induction heating device detection technique after the first instance of the FO detection technique to determine whether the object is an induction heating device based on the induction heating device detection technique; and if the object is the induction heating device: disable the wireless power transfer mode, and discontinue causing instances of the PRx detection technique and the FO detection technique.

Clause 12. The apparatus of clause 11, where the controller is further configured to: cause an instance of the PRx detection technique after the first instance of the FO detection technique to determine whether a PRx is detected; and while the PRx is detected: disable the induction heating mode, and discontinue causing instances of the induction heating device detection technique.

Clause 13. The apparatus of any one of clauses 1-9, where the controller is further configured to: determine that an object is detected by a first instance of the FO detection technique; and cause an immediate subsequent instance of the induction heating device detection technique and an immediate subsequent instance of PRx detection technique after the first instance of the FO detection technique; determine whether the object is an induction heating device based on the immediate subsequent instance of the induction heating device detection technique or a PRx based on the immediate subsequent instance of the PRx detection technique; and if neither of the immediate subsequent instance of the induction heating device detection technique nor the immediate subsequent instance of the PRx detection technique results in detection of the induction heating device or the PRx, cause an FO detected error indication via either or both of the first user interface of the apparatus and a second user interface of the PRx if the PRx is detected.

Clause 14. The apparatus of any one of clauses 11-13, further including: a user interface capable of receiving a user input indicating either the induction heating mode or the wireless power transfer mode; and where the controller is further configured to: refrain from causing instances of the FO detection technique and the PRx detection technique in response to the user interface receiving the user input that indicates the induction heating mode, and refrain from causing instances of the induction heating device detection technique in response to the user interface receiving the user input that indicates the wireless power transfer mode.

Clause 15. The apparatus of any one of clauses 1-14, further including: an interface surface associated with the one or more coils, where the controller is configured to: control the one or more coils to generate the magnetic field to heat a cooking vessel or utensil on the interface surface in accordance with the induction heating mode when the cooking vessel or utensil is detected by an instance of the induction heating device detection technique, and control the one or more coils to generate the magnetic field to transfer power to a PRx on the interface surface in accordance with the wireless power transfer mode when the PRx is detected by an instance of the PRx detection technique and no FO is detected by the FO detection technique.

Clause 16. The apparatus of any one of clauses 1-15, where the apparatus is a first Power Transmitter (PTx) associated with a first location of a hob, where the hob includes a second PTX associated with a second location, and where the controller is configured to manage timing for instances of a first plurality of object detection techniques associated with the first PTx independent of timing for instances of a second plurality of object detection techniques associated with the second PTx.

Clause 17. The apparatus of any one of clauses 1-16, where one or more of the plurality of object detection techniques include temporarily energizing the one or more coils to generate the magnetic field with an amount of detection power and measuring a characteristic associated with the magnetic field, and where the controller is configured to cause the one or more object detection units to perform the instances of the plurality of object detection techniques such that a sum of the amount of detection power for the plurality of object detection techniques over a time period is less than a maximum power threshold.

Clause 18. A method, including: implementing, by one or more detection units, a plurality of object detection techniques that includes at least an induction heating device detection technique, a wireless power receiver (PRx) detection technique, and a foreign object (FO) detection technique; causing the one or more detection units to perform instances of the plurality of object detection techniques such that each instance is performed at a different time from other instances; and controlling one or more coils of an apparatus to generate a magnetic field for induction heating or wireless power transfer in accordance with an induction heating mode or a wireless power transfer mode, respectively, based, at least in part, on results of the plurality of object detection techniques.

Clause 19. The method of clause 18, where implementing the plurality of object detection techniques includes: implementing, via an induction heating device detection unit, the induction heating device detection technique to detect a cooking vessel or utensil associated with the induction heating mode; implementing, via a communication unit, the PRx detection technique to detect a PRx associated with the wireless power transfer mode; and implementing, via a foreign object detection (FOD) unit, the FO detection technique to detect a foreign object.

Clause 20. The method of any one of clauses 18-19, further including: managing timing for the instances of the plurality of object detection techniques such that the instances occur sequentially in a periodic cycle.

Clause 21. The method of any one of clauses 18-19, further including: managing timing for the instances of the plurality of object detection techniques such that the instances of the induction heating device detection technique, the PRx detection technique, and the FO detection technique occur aperiodically during a time period.

Clause 22. The method of any one of clauses 18-21, further including: causing instances of the induction heating device detection technique to occur according to a first periodic schedule, causing instances of the PRx detection technique to occur according to a second periodic schedule, and causing instances of the FO detection technique to occur according to a third periodic schedule.

Clause 23. The method of clause 22, further including: shifting a timing for an instance of any of the induction heating device detection technique, the PRx detection technique, or the FO detection technique when the timing of the instance overlaps any other one of the induction heating device detection technique, the PRx detection technique, or the FO detection technique.

Clause 24. The method of any one of clauses 18-23, further including: determining whether a cooking vessel or utensil is detected by any instance of the induction heating device detection technique; and while the cooking vessel or utensil is detected: disabling the wireless power transfer mode, discontinuing causing instances of the PRx detection technique and the FO detection technique, causing the one or more coils to operate in accordance with the induction heating mode, and presenting an induction heating warning indication via a user interface of the apparatus to indicate that the one or more coils are operating in the induction heating mode, where the induction heating warning indication includes a hot surface warning.

Clause 25. The method of any one of clauses 18-23, further including: determining whether a PRx is detected by any instance of the PRx detection technique; and while the PRx is detected: disabling the induction heating mode, discontinuing causing instances of the induction heating device detection technique, causing further instances of the FO detection technique, and causing the one or more coils to operate in accordance with the wireless power transfer mode.

Clause 26. The method of any one of clauses 18-23, further including: determining whether an object is detected by a first instance of the FO detection technique; and causing an instance of the induction heating device detection technique after the first instance of the FO detection technique to determine whether the object is an induction heating device based on the induction heating device detection technique; and in response to determining that the object is the induction heating device: disabling the wireless power transfer mode, and discontinuing causing instances of the PRx detection technique and the FO detection technique.

Clause 27. The method of clause 26, further including: causing an instance of PRx detection technique after the first instance of the FO detection technique to determine whether the object is a PRx; and in response to determining that the object is the PRx: disabling the induction heating mode, and discontinuing causing instances of the induction heating device detection technique.

Clause 28. The method of any one of clauses 18-27, further including: determining that an object is detected by a first instance of the FO detection technique; and causing an immediate subsequent instance of the induction heating device detection technique and an immediate subsequent instance of PRx detection technique after the first instance of the FO detection technique; determining whether the object is an induction heating device based on the immediate subsequent instance of the induction heating device detection technique or a PRx based on the immediate subsequent instance of the PRx detection technique; and if neither of the immediate subsequent instance of the induction heating device detection technique nor the immediate subsequent instance of the PRx detection technique results in detection of the induction heating device or the PRx, causing an FO detected error indication via either or both of the first user interface of the apparatus and a second user interface of the PRx if the PRx is detected.

Clause 29. The method of any one of clauses 18-28, further including: receiving a user input indicating either the induction heating mode or the wireless power transfer mode; refraining from causing instances of the FO detection technique and the PRx detection technique in response to the user interface receiving the user input that indicates the induction heating mode; and refraining from causing instances of the induction heating device detection technique in response to the user interface receiving the user input that indicates the wireless power transfer mode.

Clause 30. The method of any one of clauses 18-29, where the apparatus is a first Power Transmitter (PTx) associated with a first location of a hob, where the hob includes a second PTx associated with a second location, and where the method further includes: managing timing for instances of a first plurality of object detection techniques associated with the first PTx independent of timing for instances of a second plurality of object detection techniques associated with the second PTx.

Clause 31. The method of any one of clauses 18-30, where one or more of the plurality of object detection techniques include temporarily energizing the one or more coils to generate the magnetic field with an amount of detection power and measuring a characteristic associated with the magnetic field, the method further including: managing timing for the instances of the plurality of object detection techniques such that a sum of the amount of detection power for the plurality of object detection techniques over a time period is less than a maximum power threshold.

Another innovative aspect of the subject matter described in this disclosure can be implemented as an apparatus. The apparatus may include a modem and at least one processor communicatively coupled with the at least one modem. The processor, in conjunction with the modem, may be configured to perform any one of the above-mentioned methods or features described herein.

Another innovative aspect of the subject matter described in this disclosure can be implemented as a computer-readable medium having stored therein instructions which, when executed by a processor, causes the processor to perform any one of the above-mentioned methods or features described herein.

Another innovative aspect of the subject matter described in this disclosure can be implemented as a system having means for implementing any one of the above-mentioned methods or features described herein.

As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

The various illustrative components, logic, logical blocks, modules, circuits, operations and algorithm processes described in connection with the implementations disclosed herein may be implemented as electronic hardware, firmware, software, or combinations of hardware, firmware or software, including the structures disclosed in this specification and the structural equivalents thereof. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

The hardware and data processing apparatus used to implement the various illustrative components, logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, or any conventional processor, controller, microcontroller, or state machine. A processor also may be implemented as a combination of computing devices, for example, a combination of a DSP and a microprocessor, multiple microprocessors, one or more microprocessors in conjunction with a DSP core, or any other such configuration. In some implementations, particular processes, operations and methods may be performed by circuitry that is specific to a given function.

As described above, in some aspects of the subject matter described in this specification can be implemented as software. For example, various functions of components disclosed herein, or various blocks or steps of a method, operation, process or algorithm disclosed herein can be implemented as one or more modules of one or more computer programs. Such computer programs can include non-transitory processor-executable or computer-executable instructions encoded on one or more tangible processor-readable or computer-readable storage media for execution by, or to control the operation of, a data processing apparatus including the components of the devices described herein. By way of example, and not limitation, such storage media may include RAM, ROM, EEPROM, CD-ROM or other optical disk storage, magnetic disk storage or other magnetic storage devices, or any other medium that may be used to store program code in the form of instructions or data structures. Combinations of the above should also be included within the scope of storage media.

Various modifications to the implementations described in this disclosure may be readily apparent to persons having ordinary skill in the art, and the generic principles defined herein may be applied to other implementations without departing from the scope of this disclosure. Thus, the claims are not intended to be limited to the implementations shown herein but are to be accorded the widest scope consistent with this disclosure, the principles and the novel features disclosed herein.

Additionally, various features that are described in this specification in the context of separate implementations also can be implemented in combination in a single implementation. Conversely, various features that are described in the context of a single implementation also can be implemented in multiple implementations separately or in any suitable subcombination. As such, although features may be described above as acting in particular combinations, and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one or more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

## Claims

1. An apparatus, comprising:
one or more coils (130) capable of generating a magnetic field for induction heating or wireless power transfer in accordance with an induction heating mode or a wireless power transfer mode, respectively;
**characterized by**
one or more object detection units configured to implement a plurality of object detection techniques that includes at least an induction heating device detection technique, a wireless power receiver, PRx, detection technique, and a foreign object, FO, detection technique; and
a controller (350) configured to:
cause the one or more object detection units to perform instances of the plurality of object detection techniques such that each instance is performed at a different time from other instances, wherein the controller is configured to manage timing for the instances of the plurality of object detection techniques such that the instances occur sequentially in a periodic cycle; and
control the one or more coils (130) to generate the magnetic field for the induction heating mode or the wireless power transfer mode based, at least in part, on results of the plurality of object detection techniques.

2. The apparatus of claim 1, wherein the one or more object detection units include:
an induction heating device detection unit (320) configured to implement the induction heating device detection technique to detect a cooking vessel or utensil associated with the induction heating mode;
a communication unit (310) configured to implement the PRx detection technique to detect a PRx (175) associated with the wireless power transfer mode; and
an FO detection unit (330) configured to implement the FO detection technique to detect a foreign object.

3. The apparatus of any preceding claim, further comprising:
an interface surface associated with the one or more coils (130),
wherein the controller (350) is configured to:
control the one or more coils (130) to generate the magnetic field to heat a cooking vessel or utensil on the interface surface in accordance with the induction heating mode when the cooking vessel or utensil is detected by an instance of the induction heating device detection technique, and
control the one or more coils (130) to generate the magnetic field to transfer power to a PRx (175) on the interface surface in accordance with the wireless power transfer mode when the PRx (175) is detected by an instance of the PRx detection technique and no FO (190) is detected by the FO detection technique.

4. The apparatus of any preceding claim,
wherein the apparatus is a first Power Transmitter (PTx) associated with a first location of a hob,
wherein the hob includes a second PTX associated with a second location, and
wherein the controller (350) is configured to manage timing for instances of a first plurality of object detection techniques associated with the first PTx independent of timing for instances of a second plurality of object detection techniques associated with the second PTx.

5. The apparatus of any preceding claim,
wherein one or more of the plurality of object detection techniques include temporarily energizing the one or more coils (130) to generate the magnetic field with an amount of detection power and measuring a characteristic associated with the magnetic field, and
wherein the controller (350) is configured to cause the one or more object detection units to perform the instances of the plurality of object detection techniques such that a sum of the amount of detection power for the plurality of object detection techniques over a time period is less than a maximum power threshold.

6. The apparatus of any preceding claim, wherein the controller is configured to:
cause instances of the induction heating device detection technique to occur according to a first periodic schedule,
cause instances of the PRx detection technique to occur according to a second periodic schedule, and
cause instances of the FO detection technique to occur according to a third periodic schedule.

7. The apparatus of claim 6, wherein the controller is further configured to:
shift a timing for an instance of any of the induction heating device detection technique, the PRx detection technique, or the FO detection technique when the timing of the instance overlaps any other one of the induction heating device detection technique, the PRx detection technique, or the FO detection technique.

8. The apparatus of any preceding claim, wherein the controller is further configured to:
determine whether a cooking vessel or utensil is detected by any instance of the induction heating device detection technique; and
while the cooking vessel or utensil is detected:
disable the wireless power transfer mode, and
discontinue causing instances of the PRx detection technique and the FO detection technique.

9. The apparatus of claim 8, wherein the controller is further configured to:
cause the one or more coils to operate in accordance with the induction heating mode; and
present an induction heating warning indication via a user interface of the apparatus to indicate that the one or more coils are operating in the induction heating mode.

10. The apparatus of claim 9, wherein the appliance is associated with a pan location of a hob, and wherein the induction heating warning indication includes a hot surface warning associated with the pan location.

11. The apparatus of any preceding claim, wherein the controller is further configured to:
determine whether a PRx is detected by any instance of the PRx detection technique; and
while the PRx is detected:
disable the induction heating mode,
discontinue causing instances of the induction heating device detection technique, and
cause the one or more coils to operate in accordance with the wireless power transfer mode.

12. The apparatus of any one of claims 1-10, wherein the controller is further configured to:
determine whether an object is detected by a first instance of the FO detection technique; and
cause an instance of the induction heating device detection technique after the first instance of the FO detection technique to determine whether the object is an induction heating device based on the induction heating device detection technique; and
if the object is the induction heating device:
disable the wireless power transfer mode, and
discontinue causing instances of the PRx detection technique and the FO detection technique.

13. The apparatus of claim 12, wherein the controller is further configured to:
cause an instance of the PRx detection technique after the first instance of the FO detection technique to determine whether a PRx is detected; and
while the PRx is detected:
disable the induction heating mode, and
discontinue causing instances of the induction heating device detection technique.

14. The apparatus of any one of claims 1-10, wherein the controller is further configured to:
determine that an object is detected by a first instance of the FO detection technique; and
cause an immediate subsequent instance of the induction heating device detection technique and an immediate subsequent instance of PRx detection technique after the first instance of the FO detection technique;
determine whether the object is an induction heating device based on the immediate subsequent instance of the induction heating device detection technique or a PRx based on the immediate subsequent instance of the PRx detection technique; and
if neither of the immediate subsequent instance of the induction heating device detection technique nor the immediate subsequent instance of the PRx detection technique results in detection of the induction heating device or the PRx, cause an FO detected error indication via either or both of the first user interface of the apparatus and a second user interface of the PRx if the PRx is detected.

15. The apparatus of any one of claims 12-14, further comprising:
a user interface capable of receiving a user input indicating either the induction heating mode or the wireless power transfer mode; and
wherein the controller is further configured to:
refrain from causing instances of the FO detection technique and the PRx detection technique in response to the user interface receiving the user input that indicates the induction heating mode, and
refrain from causing instances of the induction heating device detection technique in response to the user interface receiving the user input that indicates the wireless power transfer mode.
